# EUROPEAN PATENT APPLICATION

(11) **EP 4 166 973 A1**
(43) Date of publication of application: **19.04.2023**
(21) Application number: 21398018.8
(22) Date of filing: 18.10.2021
(51) Int. Cl.: G01S 3/18, G01S 1/02

(54) **METHOD AND DEVICE FOR IDENTIFYING THE POSITION OF A FLOATING DEVICE**

(71) Applicant: Fundação Noras, 2565-781 Turcifal (PT)
(72) Inventor: Fundação Noras, 2565-781 Turcifal (PT)
(74) Representative: do Nascimento Gomes, Rui

(57) **Abstract**

The present disclosure relates to the area of navigation systems for floating vessels, such as boats or ships, in coastal areas. An object of the present disclosure is a method for identifying the position of a floating element (10) comprising receiving a first wireless signal from the floating element (10) at a first directional antenna (11) arranged in a position for better detecting a port signal, and a second wireless signal from the floating element (10) at a second directional antenna (12) arranged at a position for better detecting a signal to starboard, and determining a proximity value of the floating element (10) to the first directional antenna (11) and a proximity value of the floating element (10) to the second directional antenna (12), thereby determining the position of the floating element (10) relative to port and/or starboard. This solution enables an automated identification of marker buoys and other floating elements by means of a reliable and simple system.

## Description

### TECHNICAL FIELD

The present disclosure falls within the area of navigation systems for floating vessels, such as boats or ships, in coastal areas.

### BACKGROUND

Navigation in coastal areas has particularities that include, among others, the need to identify elements such as deeper waters, a route to be followed by a vessel when entering a port bar, harbour or dock, or the identification of isolated dangers.

To better govern the identification of these elements, there are systems such as the Maritime Buoyage System of the International Association of Marine Aids to Navigation and Lighthouse Authorities (IALA), which defines specific information on marker buoys.

This system includes marker buoys with different colours and markings, visible to the crew of a vessel. The marker buoys may also have lighting elements, for better visibility, for example, in night conditions.

Over time, efforts have been made to improve signalling with the help of several technologies, for example by means of the aforementioned lighting elements.

US patent application US 4,071,845 A is an example of an improved system for entry into a harbour of refuge, where signal buoys are able to communicate wirelessly, emitting a signal detectable by a vessel in a harbour entry route.

It is thus a system deployable on a vessel, for improved identification or recognition of signalling elements such as marker buoys.

If, on the one hand, it is more common for larger, long-haul vessels to have more technological capabilities and thus be able to detect signalling elements, it is also true that most vessels, and in particular those of medium or smaller size, do not have any automated system for the identification of marker buoys (or other signalling elements) or even of potential obstacles existing in a coastal region or harbour entrance.

This is partly due to the complexity and consequent cost associated with this type of system, which acts as a disincentive to its wider use.

The solution of the present disclosure thus enables an automated identification of marker buoys and other floating elements, through a system which is not only reliable, but also of great constructive simplicity.

### SUMMARY OF THE DISCLOSURE

A method for identifying (or recognising) the position of a floating element is an object of the present disclosure.

In an embodiment, the method of the present disclosure comprises the steps of:
receiving at least a first wireless signal from the floating element on at least a first directional antenna, the first directional antenna being adapted to measure with higher intensity a wireless signal emitted on the port side of a floating vessel, than a wireless signal emitted on the starboard side of the floating vessel,
receiving at least a second wireless signal from the floating element, in at least one second directional antenna, the second directional antenna being adapted to measure with higher intensity a wireless signal emitted on the starboard side of the floating vessel, than a wireless signal emitted on the port side of the floating vessel,
determining, (i) based on the first received wireless signal, a first proximity value of the floating element to the first directional antenna and, (ii) based on the second received wireless signal, a second proximity value of the floating element to the second directional antenna,
comparing the first proximity value with the second proximity value and thereby identifying the position of the floating element with respect to the port and/or starboard side of the floating vessel.

The method of the present disclosure allows, in a simplified manner, identifying or determining the presence of a floating element capable of emitting a wireless signal, such as a marker buoy capable of emitting a wireless signal, in particular enabling to determine i) whether any floating element is in the vicinity of the floating vessel, ii) whether such floating element is on the port or on the starboard side of the vessel, and iii) how far the floating element is from the directional antennas. Preferably, the first directional antenna has characteristics identical to the second directional antenna.

A device for identifying a floating element is also an object of the present disclosure.

In an embodiment, the device of the present disclosure comprises two or more directional antennas and a controller. In an embodiment, the controller is configured to implement the method of the present disclosure, in any one of its embodiments, in particular the method of any one of claims 1-9.

Also an object of the present disclosure is a floating vessel with identification of a floating element comprising a stern region, a bow region and an intermediate region arranged between the stern and the bow.

In an embodiment, the vessel comprises the device of the present disclosure, wherein at least one of the directional antennas is arranged in the port bow region and at least one of the remaining directional antennas is arranged in the starboard bow region.

A system for identifying a floating element is also an object of the present disclosure.

In an embodiment of the system, the system comprises the device of the present disclosure and, additionally, a floating element. In an embodiment, the system is configured to implement the method of the present disclosure, in particular the method of any one of claims 11-12.

### DESCRIPTION OF THE FIGURES

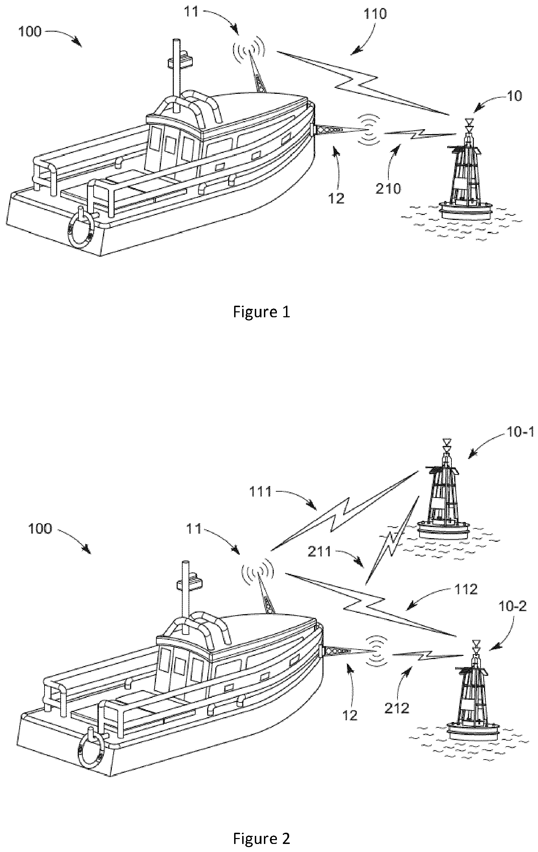

Figure 1 - Schematic representation of an embodiment of the method of the present disclosure, wherein a first antenna and a second antenna are arranged on a floating vessel (100). The first antenna is arranged on the port side and the second antenna is arranged on the starboard side. Additionally, a floating element (10), in particular a marker buoy, emits at least one wireless signal. In an embodiment, one single wireless signal is emitted. This wireless signal is detected at the first antenna as a first wireless signal (110) and at the second antenna as a second wireless signal (120). The comparison performed by the present disclosure leads to the conclusion that, when determining that the proximity value indicates greater proximity to the second wireless antenna, the marker buoy is on starboard. In another embodiment, two wireless signals are emitted. A first wireless signal (110) is detected at the first antenna as being a first wireless signal (110) and a second wireless signal (120) is detected at the second antenna as being a second wireless signal (120). The comparison performed by the present disclosure leads to the conclusion that, when determining that the proximity values indicate greater proximity to the second wireless antenna, the marker buoy is on starboard.
Figure 2 - Schematic representation of an embodiment of the method of the present disclosure, wherein a first antenna and a second antenna are arranged on a floating vessel (100) as in the embodiment depicted in Figure 1. Additionally, two floating elements, in particular two marker buoys - a first and a second marker buoy - are in the vicinity of the vessel and emit at least one wireless signal each. In one embodiment, and repeating any of the described embodiments with respect to signal emission from the floating vessel (100) within the scope of figure 1, the comparison performed by the present disclosure leads to the conclusion that, when determining that the proximity values indicate a greater proximity of the first buoy to the first wireless antenna, the first marker buoy is located on the port side. In one embodiment, and repeating any of the described embodiments with respect to the signal emission from the floating vessel (100) within the scope of figure 1, the comparison performed by the present disclosure leads to the conclusion that, when determining that the proximity values indicate a greater proximity of the second buoy to the second wireless antenna, the second marker buoy is on the starboard side.

### DETAILED DESCRIPTION

Various embodiments of the method of the present disclosure are described below.

In one embodiment of the method of the present disclosure, the first wireless signal (110) and the second wireless signal (120) may be according to any wireless communication protocol suitable for said communication.

Possible examples are local area network wireless communication protocols at a frequency in the Industrial, Scientific and Medical (ISM) radio frequency band.

In an embodiment, the first wireless signal (110) and the second wireless signal (120) may be emitted with a frequency in the range of 433 MHz (433.05 MHz to 434.79 MHz), 915 MHz (902 MHz to 928 MHz) or 2.4 GHz (2.4 GHz to 2.5 GHz).

The first directional antenna (11) is adapted to measure with higher intensity a wireless signal emitted on the port side of a floating vessel (100) than a wireless signal on the starboard side of the floating vessel (100), and the second directional antenna (12) is adapted to measure with higher intensity a wireless signal emitted on the starboard side of the floating vessel (100) than a wireless signal on the port side of the floating vessel (100).

In an embodiment, the first directional antenna (11) is positioned in the port side relative to the second directional antenna (12). Reciprocally, the second directional antenna (12) is positioned in the starboard side relative to the first directional antenna (11). Preferably, the first directional antenna (11) is at a position in the port side of the floating vessel (100), and the second directional antenna (12) is at a position in the starboard side of the floating vessel (100).

In an embodiment, the first directional antenna (11) is installed such that it makes an angle of 0° to +180°, optionally +30 to +60°, optionally +45°, with respect to a longitudinal cut line between the fore and aft of the floating vessel (100).

In an embodiment, the second directional antenna (12) is installed such that it makes an angle of 0° to -180°, optionally -30 to -60°, optionally -45°, with respect to a longitudinal cut line between the fore and aft of the floating vessel (100).

In an embodiment, the position of the floating element (10) relative to the first directional antenna (11) and/or the second directional antenna (12) is determined exclusively by comparing the first proximity value with the second proximity value.

In an embodiment, the first directional antenna (11) and the second directional antenna (12) are at an equal distance from the fore of the floating vessel (100).

Based on the first received wireless signal (110), a first proximity value of the floating element (10) to the first directional antenna (11) is determined.

Similarly, based on the second received wireless signal (120), a second proximity value of the floating element (10) to the second directional antenna (12) is determined.

The proximity value may be determined by any method known in the prior art for determining the proximity or distance of a device from a received wireless signal such as, for example, based on the received signal strength indicator (RSSI) associated with the received signal.

The first signal is received by at least one first directional antenna (11) and the second signal is received by at least one second directional antenna (12). The greater number of first and second directional antennas allows for greater reliability in determining the respective proximity values, which can be balanced with greater simplicity and corresponding reliability of the solution.

By comparing the first proximity value with the second proximity value determined, it is possible to identify or determine the position of the floating element (10) with respect to the port and/or starboard side of the floating vessel (100).

The port of the floating vessel (100) may be considered as a region of the vessel that lies - in a longitudinal section between the fore and aft of the floating vessel (100) - to port of that longitudinal section.

The starboard of the floating vessel (100) may be considered as a region of the vessel that lies - in a longitudinal section between fore and aft of the floating vessel (100) - to starboard of that longitudinal section.

In an embodiment, based on the comparison of the first proximity value with the second proximity value, an automatic determination is additionally performed as to whether the floating element (10) is in the port or starboard side of the vessel.

As an example, a first proximity value higher than a second proximity value means that the transmitting floating element (10) is in the starboard side of the floating vessel (100), i.e., in an embodiment, the transmitting floating element (10) is at a greater physical distance from the first antenna than from the second antenna.

As another example, a first proximity value lower than a second proximity value means that the transmitting floating element (10) is in the port side of the floating vessel (100), i.e., in an embodiment, the transmitting floating element (10) is at a shorter physical distance from the first antenna than from the second antenna.

As another example, a first proximity value identical or substantially identical to a second proximity value means that the transmitting floating element (10) is substantially aligned or collinear with a longitudinal section between fore and aft of the floating vessel (100).

In an embodiment, the first wireless signal (110) and the second wireless signal (120) consist of the same signal coming from the floating element (10). This is potentially the most common situation, where a signal wirelessly emitted by the floating element (10) is detected by both antennas.

In an embodiment, the first signal and the second signal comprise a unique digital identifier of the transmitting floating element (10). This provides for an unambiguous identification of the floating element (10).

In an embodiment, the method comprises determining whether the first wireless signal (110) and the second wireless signal (120) received comprise the same unique digital identifier, prior to determining the respective first and second proximity values. Thus, the method only performs such determination if the first wireless signal (110) and the second wireless signal (120) received comprise the same unique digital identifier.

As another example, the method may include a confirmation step, wherein the method confirms, using an accessible digital database, if the location in which the unique digital identifier is positioned and wherein it was received corresponds to an expected location for that unique digital identifier, according to the information in the database. This may be particularly relevant for the confirmation of the location associated with a marker buoy and consequently of the vessel. In a cumulative or alternative embodiment, the wireless signal from the floating element (10) may contain information of the geographical location of the floating element (10).

As another example, the method may comprise a verification step, where it checks, using an accessible digital database, whether the received unique digital identifier is registered in the digital database. This may be particularly relevant for identification of a small vessel consisting of the floating element (10), whereby maritime authorities of a country may thus easily verify the identity of such a vessel.

In an embodiment, the method comprises - in response to receiving the same wireless signal at the first directional antenna (11) and the second directional antenna (12) and thus including the same unique digital identifier - transmitting a wireless message directed to the unique digital identifier with a control command causing the floating element (10) to respond with a set of digital information, including registration data of the floating element (10), including the name of the owner of the floating element (10).

In an embodiment, determining a first proximity value of the floating element (10) to the first directional antenna (11) comprises determining a physical distance between the floating element (10) and the first directional antenna (11). In an embodiment, determining a second proximity value of the floating element (10) to the second directional antenna (12) comprises determining a physical distance between the floating element (10) and the second directional antenna (12). Said physical distances may, as noted above, be determined by any method known in the prior art for determining proximity or distance of a device from a received wireless signal.

In an embodiment of the method, the latter additionally comprises an automatic feedback step which is provided to a user, the automatic feedback comprising a visual, audible and/or haptic indication of the position of the floating element (10) relatively to port and/or starboard of the floating vessel (100).

In an embodiment, the automatic feedback step comprises transmitting a message according to a communications protocol to an electronic unit of a vessel such as, for example, a transmission according to a NMEA (National Marine Electronics Association) protocol, such as the NMEA 2000 protocol or IEC 61162-3 (IEC - International Electrotechnical Commission).

In an embodiment, the method comprises, for a plurality of first signals (111, 112) and a plurality of second signals (211, 212) received with distinct unique digital identifiers, determining the presence of more than one transmitting floating element (10) and determining the position of each of the floating elements (10-1, 10-2) relative to the port and/or starboard of the floating vessel (100). Since it is possible that a vessel is at a location where more than one floating element (10) is detectable, the method of the present disclosure is implemented, as described above, for a plurality of first signals (111, 112) and a plurality of second signals (211, 212) received with distinct unique digital identifiers, thereby determining the presence and respective location of the floating elements (10-1, 10-2).

In an embodiment, the method comprises, for a plurality of first signals (111, 112) and a plurality of second signals (211, 212) received with identical unique digital identifiers over a period of time, determining the change of position of the corresponding floating element (10) relative to port and/or starboard based on the variation of the first proximity value of the floating element (10) relative to the first directional antenna (11) and the second proximity value of the floating element (10) relative to the second directional antenna (12). This makes it possible to identify a change in the relative position of the floating element (10) in relation to the vessel, by displacement of the vessel and/or the floating element (10) comparatively to a previous moment.

In an embodiment, the floating vessel (100) consists of a boat or a ship.

In an embodiment, the floating element (10) consists of a marker buoy, comprising means for emitting one or more wireless signals. Optionally, the wireless signals comprise a unique digital identifier of the marker buoy and/or location information of the marker buoy.

In an alternative embodiment, the floating element (10) consists of a small boat comprising means for emitting one or more wireless signals. Optionally, the wireless signals comprise a unique digital identifier of the small vessel and/or location information of the small vessel. As an example, the small vessel may consist of a dinghy.

Various embodiments of the device of the present disclosure are described below.

The device may comprise wireless receiving and/or transmitting means comprising the two or more antennas. The wireless receiving means and, optionally, the wireless transmitting means are configured to receive first and second wireless signals. In an embodiment, the wireless receiving means and, optionally, the wireless transmitting means comprise a wireless communication controller.

The device may consist of a module installable on a floating vessel (100), so that at least a first directional antenna (11) of the module is installable on the floating vessel (100), such that it measures with higher intensity a wireless signal emitted to port than a wireless signal emitted to starboard. Similarly, at least a second directional antenna (12) is installable on the floating vessel (100) such that it measures with higher intensity a wireless signal emitted to starboard than a wireless signal emitted to port.

The device is configured to independently provide feedback to a user by using, for example, visual, audible and/or haptic means for indicating the position of the floating element (10) relative to port and/or starboard.

As an example, the device may comprise two lighting elements, one of which is associated with the first antenna and the other with the second antenna, one of which is configured to keep the lighting element corresponding to the antenna with the lower signal proximity value coming from the floating element (10) on, while the other is kept off. The same example is correspondingly applicable to embodiments wherein the indication means are audible and/or haptic.

Alternatively or cumulatively, the device may be configured to transmit a message according to a communications protocol to an electronic unit of the vessel.

Various embodiments of the floating vessel (100) of the present disclosure are described below.

In an embodiment, the floating vessel (100) consists of a boat or a ship.

In an embodiment of the vessel, the first directional antenna (11) and the second directional antenna (12) are at the same distance from the fore of the floating vessel (100).

Various embodiments of the system of the present disclosure are described below.

The floating element (10) may comprise wireless transmitting means and, optionally, wireless receiving means configured to transmit at least one wireless signal. In an embodiment, the wireless transmitting means and, optionally, wireless receiving means, comprise a wireless communication controller.

In an example of implementation, the system may consist of a kit comprising a module installable on a floating vessel (100) and an element installable on a floating element (10) such that i) at least a first directional antenna (11) of the module is installable at a position of a floating vessel (100), and at least a second directional antenna (12) is installable at another position of the floating vessel (100), and (ii) the element installable on a floating element (10) is attachable to a portion of the floating element (10), such as a buoy or small vessel, such that it enables said floating element (10) to transmit a wireless signal detectable by the directional antennas.

In various embodiments, the method, device, vessel, system, and/or elements thereof include components for performing at least some of the example features and capabilities of the described methods, whether by means of hardware components (such as memory and/or processor), software, or any combination thereof.

In various embodiments, the device controller or said communications controllers may consist of or comprise a microcontroller, with the ability to receive external data via inputs and provide triggering of outputs, based on configured rules and/or predefined programming.

An article for use with the method, the device, the vessel and/or the system, such as a pre-recorded storage device or other similar computer-readable medium including program instructions recorded thereon, or a computer data signal carrying computer-readable program instructions may direct a device to facilitate implementation of the methods described herein. It is understood that such apparatus, articles of manufacture and computer data signals are also within the scope of the present disclosure.

A "computer-readable medium" is understood as any medium that can store instructions for use or execution by a computer or other computing device, including read-only memory (ROM), erasable programmable read-only memory (EPROM) or flash memory, random access memory (RAM), a portable floppy disk, a hard disk drive (HDD), a solid state storage device (e.g., NAND flash or synchronous dynamic RAM (SDRAM)), and/or an optical disc, such as a Compact Disc (CD), Digital Versatile Disc (DVD), or Blu-Ray ^{™} Disc.

As will be evident to a person skilled in the art, the present invention should not be limited to the embodiments described herein, with a number of changes being possible, which remain within the scope of this invention.

Of course, the preferred embodiments above described are combinable in the different possible forms, the repetition of all such combinations being herein avoided.

## Claims

1. A method for identifying the position of a floating element (10) **characterized in that** it comprises the following steps:
receiving at least a first wireless signal (110) from the floating element (10) in at least one first directional antenna (11), the first directional antenna (11) being adapted to measure with higher intensity a wireless signal emitted on the port side of a floating vessel (100) than a wireless signal emitted on the starboard side of the floating vessel (100),
receiving at least a second wireless signal (120) from the floating element (10) in at least one second directional antenna (12), the second directional antenna (12) being adapted to measure with higher intensity a wireless signal emitted on the starboard side of the floating vessel (100) than a wireless signal emitted on the port side of the floating vessel (100),
determining, (i) based on the first received wireless signal (110), a first proximity value of the floating element (10) to the first directional antenna (11) and, (ii) based on the second received wireless signal (120), a second proximity value of the floating element (10) to the second directional antenna (12),
comparing the first proximity value with the second proximity value and thereby identifying the position of the floating element (10) relative to the port and/or starboard side of the floating vessel (100).

2. A method according to the preceding claim, wherein determining a first proximity value of the floating element (10) to the first directional antenna (11) comprises determining a physical distance between the floating element (10) and the first directional antenna (11), and determining a second proximity value of the floating element (10) to the second directional antenna (12) comprises determining a physical distance between the floating element (10) and the second directional antenna.

3. A method according to any one of the preceding claims, wherein the first directional antenna (11) and the second directional antenna (12) are at an equal distance from the fore of the floating vessel (100).

4. A method according to any one of the preceding claims, wherein, based on a comparison of the first proximity value with the second proximity value, an automatic determination of whether the floating element (10) is on the port or starboard side of the vessel is additionally performed.

5. A method according to any one of the preceding claims, further comprising an automatic feedback step, which is given to a user, the automatic feedback comprising a visual, audible and/or haptic indication of the position of the floating element (10) relative to port and/or starboard of the floating vessel (100).

6. A method according to any one of the preceding claims, wherein the first signal and the second signal comprise a unique digital identifier of the transmitting floating element (10).

7. A method according to the preceding claim, comprising for a plurality of first signals (111, 112) and a plurality of second signals (211, 212) received with distinct unique digital identifiers, determining the presence of more than one transmitting floating element (10) and determining the position of each of the floating elements (10-1, 10-2) with respect to port and/or starboard of the floating vessel (100).

8. A method according to any one of claims 6-7 comprising, for a plurality of first signals and a plurality of second signals received with identical unique digital identifiers over a period of time, determining the variation of the position of the corresponding floating element (10) relative to port and/or starboard based on the variation of the first proximity value of the floating element (10) relative to the first directional antenna (11) and the second proximity value of the floating element (10) relative to the second directional antenna (12).

9. A method according to any one of the preceding claims, wherein the first wireless signal (110) and the second wireless signal (120) consist of a same signal originating from the floating element (10).

10. A method according to any one of the preceding claims, wherein the floating vessel (100) consists of a boat or ship.

11. A method according to any one of claims 1-10, wherein the floating element (10) comprises a marker buoy comprising means for emitting one or more wireless signals, optionally the wireless signals comprising a unique digital identifier of the marker buoy.

12. A method according to any one of claims 1-10 wherein the floating element (10) consists of a small vessel comprising means for emitting one or more wireless signals, optionally the wireless signals comprising a unique digital identifier of the small vessel.

13. A device for identifying the position of a floating element (10) **characterized in that** it comprises two or more directional antennas and a controller, the controller being configured to implement the method of any one of claims 1-9.

14. A floating vessel (100) with position identification of a floating element (10) comprising a stern region, a bow region and an intermediate region disposed between the stern and the bow, the vessel being **characterized in that** it comprises the device of the preceding claim and by at least one of the directional antennas being arranged in the port bow region and at least one other of the directional antennas being arranged in the starboard bow region, the floating vessel (100) optionally consisting of a boat or a ship and, optionally, the first directional antenna (11) and the second directional antenna (12) being at the same distance from the fore of the floating vessel (100).

15. A system for identifying the position of a floating element (10) **characterized in that** it comprises the device of claim 13 and additionally a floating element (10), the system being configured to implement the method of any one of claims 11-12.
